# FASCICULE DE BREVET EUROPEEN

(11) **EP 3 712 807 B1**
(45) Date de publication et mention de la délivrance du brevet: **01.12.2021**
(21) Numéro de dépôt: 20160486.5
(22) Date de dépôt: 02.03.2020
(51) Int. Cl.: G06K 9/00, G06K 9/62

(54) **PROCÉDÉ D'IDENTIFICATION DE BAGAGES**
IDENTIFIZIERUNGSVERFAHREN VON GEPÄCK
METHOD FOR IDENTIFYING LUGGAGE

(30) Priorité: 22.03.2019 FR 1902969
(43) Date de publication de la demande: 23.09.2020
(73) Titulaire: Idemia Identity & Security France, 92400 Courbevoie (FR)
(72) Inventeur: MAURIN, Franck, 92400 Courbevoie (FR); BARRE, Anthony, 92400 Courbevoie (FR)
(74) Mandataire: Cabinet Le Guen Maillet

(56) Documents cités:
- EP-A1- 3 312 785
- WO-A1-2014/060227
- US-A1- 2018 189 611

## Description

### DOMAINE TECHNIQUE

L'invention concerne un procédé d'identification d'un bagage dénué d'identifiant représentatif d'un destinataire dudit bagage, dit bagage non-identifié, un dispositif et un système utilisant ledit procédé.

### ETAT DE LA TECHNIQUE ANTERIEURE

Chaque année, chaque compagnie aérienne doit transporter un grand nombre de bagages. On dénombre en effet environ quatre milliards de bagages transportés par an par l'ensemble de compagnies aériennes. Bien qu'en théorie chaque bagage est systématiquement étiqueté avant d'être transporté, un certain nombre de ces bagages sont perdus. Ces pertes sont souvent dues à des arrachages de leur étiquette. Une fois dénué de son étiquette, c'est-à-dire sans identifiant permettant d'identifier le destinataire dudit bagage, le bagage devient un bagage non-identifié pour lequel il est très difficile de retrouver le destinataire. Le destinataire d'un bagage est soit son propriétaire soit une personne ou une entité à qui ce bagage est destiné. Même si, le pourcentage de bagages sans étiquette (0.07%) peut paraître faible, la recherche de leur destinataire est une opération longue et coûteuse ayant un impact financier non négligeable pour les compagnies aériennes, sans certitude de résultat : jusque-là, les bagages perdus pour lesquels aucun destinataire n'a pu être identifié sont détruits, ce qui du point de vue des destinataires est largement insatisfaisant. Le document EP3312785A1 divulgue un système d'identification et de suivi de bagages non identifiés à partir d'images tridimensionnelles comparées directement avec une base de données.

### EXPOSE DE L'INVENTION

Il est souhaitable de pallier ces inconvénients de l'état de la technique. Il est notamment souhaitable de proposer une méthode permettant notamment d'identifier un destinataire d'un bagage non-identifié.

Selon un premier aspect de l'invention, l'invention concerne un procédé d'identification d'un bagage dénué d'identifiant représentatif d'un destinataire dudit bagage, dit bagage non-identifié. Le procédé comprend : obtenir au moins deux images du bagage non-identifié de types différents, le type d'une image d'un bagage dépendant d'un point de vue sur ledit bagage représenté par ladite image et/ou d'une nature des données représentatives dudit bagage dans ladite image prise parmi une pluralité de natures de données différentes comprenant des données représentatives du domaine du visible et/ou des données représentatives du domaine infra-rouge et/ou des données représentatives d'informations tridimensionnelles ; pour chaque image du bagage non identifié obtenue : appliquer à ladite image un réseau de neurones convolutif entraîné sur des images de bagages du même type que ladite image afin d'obtenir pour chaque classe d'une pluralité de classes de bagages définies pour le type de l'image une probabilité que ledit bagage non-identifié appartienne à ladite classe ; et, identifier la classes de bagages ayant la probabilité la plus élevée ; appliquer une procédure de recherche de bagages comprenant : rechercher des bagages correspondant à chaque classe identifiée dans une base de données de bagages afin d'obtenir au moins un bagage candidat, chaque bagage de ladite base de données étant associé à un identifiant représentatif d'un destinataire du bagage ; comparer le bagage non-identifié avec chaque bagage candidat afin d'identifier le destinataire du bagage non-identifié.

L'invention permet donc d'obtenir un ensemble restreint de bagages candidats, ce qui facilite l'identification du destinataire du bagage non-identifié.

Selon un mode de réalisation, le procédé comprend obtenir au moins une information représentative du bagage non-identifié parmi un poids, une couleur, au moins une dimension, la procédure de recherche de bagages comprenant en outre, rechercher dans la base de données des bagages correspondant à chaque information représentative dudit bagage non-identifié.

Selon un mode de réalisation, chaque bagage référencé dans la base de données est associé à une information d'horodatage représentant une date d'enregistrement dudit bagage, la procédure de recherche de bagages comprenant en outre, rechercher dans la base de données des bagages associés à une information d'horodatage correspondant à une période déterminée à partir d'une date de découverte du bagage non-identifié.

Selon un mode de réalisation, chaque bagage référencé dans la base de données est associé à un nombre d'informations de classification égal à un nombre de types d'images considérés lors de chaque classification d'un bagage dans la base de données, chaque type d'images utilisé pour le bagage non-identifié correspondant à au moins un type d'images considéré lors de chaque classification d'un bagage dans la base de données, chaque information de classification correspondant à un type d'images et étant représentative d'une classe d'une pluralité de classes associée audit type dans laquelle le bagage a été classifié.

Selon un deuxième aspect de l'invention, l'invention concerne un dispositif d'identification d'un bagage dénué d'identifiant représentatif d'un destinataire dudit bagage, dit bagage non-identifié ; le dispositif comprend : des moyens d'obtention pour obtenir au moins deux images du bagage non-identifié, de types différents, le type d'une image d'un bagage dépendant d'un point de vue sur ledit bagage représenté par ladite image et/ou d'une nature des données représentatives dudit bagage dans ladite image prise parmi une pluralité de natures de données différentes comprenant des données représentatives du domaine du visible et/ou des données représentatives du domaine infra-rouge et/ou des données représentatives d'informations tridimensionnelles ; des moyens de classification appliqués à chaque image du bagage non identifié obtenue comprenant : des moyens de traitement pour appliquer à ladite image un réseau de neurones convolutif entraîné sur des images de bagages du même type que ladite image afin d'obtenir pour chaque classe d'une pluralité de classes de bagages définies pour le type de l'image une probabilité que ledit bagage non-identifié appartienne à ladite classe ; et, des moyens d'identification pour identifier la classe de bagages ayant la probabilité la plus élevée ; des moyens de traitement pour appliquer une procédure de recherche de bagages comprenant : des moyens de recherche pour rechercher des bagages correspondant à chaque classe identifiée dans une base de données de bagages afin d'obtenir au moins un bagage candidat, chaque bagage de ladite base de données étant associé à un identifiant représentatif d'un destinataire du bagage ; et, des moyens de comparaison pour comparer le bagage non-identifié avec chaque bagage candidat afin d'identifier le destinataire du bagage non-identifié.

Selon un troisième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un quatrième aspect de l'invention, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un exemple de bagage ;
[Fig. 2] illustre schématiquement un exemple de système permettant d'acquérir des images d'un bagage ;
[Fig. 3] illustre un exemple d'architecture matérielle du dispositif mettant en œuvre l'invention ;
[Fig. 4] illustre schématiquement un procédé d'identification d'un destinataire d'un bagage non-identifié ;
[Fig. 5] illustre schématiquement un détail du procédé d'identification d'un destinataire d'un bagage non-identifié ;
[Fig. 6A] illustre schématiquement un exemple de procédé de création de classes ;
[Fig. 6B] illustre schématiquement un exemple de procédé d'entraînement de réseaux de neurones convolutifs ;
[Fig. 6C] illustre schématiquement un exemple de procédé de validation de réseaux de neurones convolutifs ; et,
[Fig. 7] illustre schématiquement un exemple de procédé de classement de bagages basé sur des réseaux de neurones convolutifs.

### EXPOSE DETAILLE DE MODES DE REALISATION

L'invention est décrite par la suite dans un contexte de transport aérien et se focalise sur le transport des bagages. L'invention est toutefois adaptée à d'autres contextes où des bagages sont pris en charge par un transporteur. Par exemple, l'invention est adaptée au transport par bateau ou par car, lorsque les bagages sont étiquetés préalablement au transport puis pris en charge par le transporteur. L'invention s'applique aussi à tout objet transporté par un transporteur qui est étiqueté préalablement au transport, l'objet étant pris en charge par le transporteur.

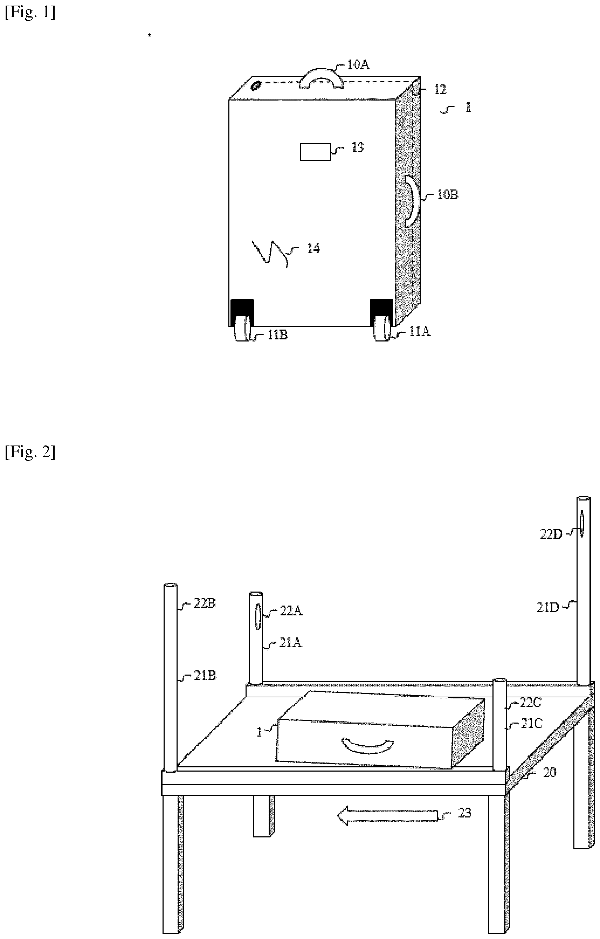

La **Fig. 1** illustre schématiquement un exemple de bagage 1.

Le bagage 1 représenté en Fig. 1 possède un ensemble de caractéristiques. Le bagage 1 comprend six faces sensiblement rectangulaires dont deux faces comprennent une poignée (10A, 10B). Le bagage 1 comprend de plus deux roulettes 11A et 11B, un système de fermeture 12 tel qu'une fermeture éclair, une marque 13 telle qu'un signe distinctif du fabricant du bagage. Les faces du bagage comportent ici une couleur uniforme et sont faites de matériaux présentant une certaine texture. Le bagage est abimé puisqu'il comporte notamment une rayure visible 14. L'ensemble de ces caractéristiques du bagage 1 forme une signature dudit bagage 1.

Une solution possible qui pourrait permettre d'identifier un destinataire d'un bagage non-identifié serait, lors de l'étiquetage de chaque bagage, de conserver l'ensemble des caractéristiques dudit bagage dans une base de données. Ainsi, lorsqu'un bagage serait à identifier, il serait possible de reprendre l'ensemble des caractéristiques dudit bagage et de les comparer aux caractéristiques des bagages stockées dans la base de données pour retrouver le bagage correspondant.

Une première limitation de cette solution est liée au peu de temps laissé à un opérateur en charge de l'étiquetage de chaque bagage pour stocker l'ensemble des caractéristiques de chaque bagage. Un opérateur n'a en effet pas le temps de noter ces caractéristiques. Il serait donc préférable que la récupération de l'ensemble des caractéristiques d'un bagage soit automatique.

Une deuxième limitation est liée au peu de diversité d'aspect dans les bagages. Il est connu qu'une majorité de bagages sont très similaires. Une majorité de bagages est rectangulaire, possède deux ou quatre roulettes, une à deux poignées, un système de fermeture de type fermeture éclair et est de couleur sombre. Quand bien même il serait matériellement possible de laisser un opérateur noter l'ensemble des caractéristiques d'un bagage, la question des caractéristiques à noter se pose. En effet, il est primordial de noter des caractéristiques permettant de distinguer les bagages entre eux.

De ce peu de diversité d'aspect des bagages découle une troisième limitation. Deux bagages très similaires se distinguent généralement sur des détails. Un opérateur n'est pas forcément capable de distinguer de tels détails notamment parce que les conditions dans lesquelles il observe les bagages ne sont pas adaptées.

La **Fig. 2** illustre schématiquement un exemple de système permettant d'acquérir des images d'un bagage.

La Fig. 2 représente schématiquement un poste d'enregistrement de bagages 20 d'un aéroport. Un utilisateur dépose son bagage (par exemple le bagage 1) sur un tapis roulant compris dans le poste d'enregistrement 20 comprenant des moyens de mesure du poids dudit bagage. Une fois des formalités de contrôle effectuées par un opérateur en charge du poste d'enregistrement 20 (contrôle d'identité, édition d'une carte d'embarquement, etc), l'opérateur fixe une étiquette sur ledit bagage. Cette étiquette comprend un identifiant représentatif d'un destinataire dudit bagage. Ici, le destinataire du bagage est l'utilisateur ayant déposé le bagage qui réceptionnera son bagage à son arrivée à son aéroport de destination.

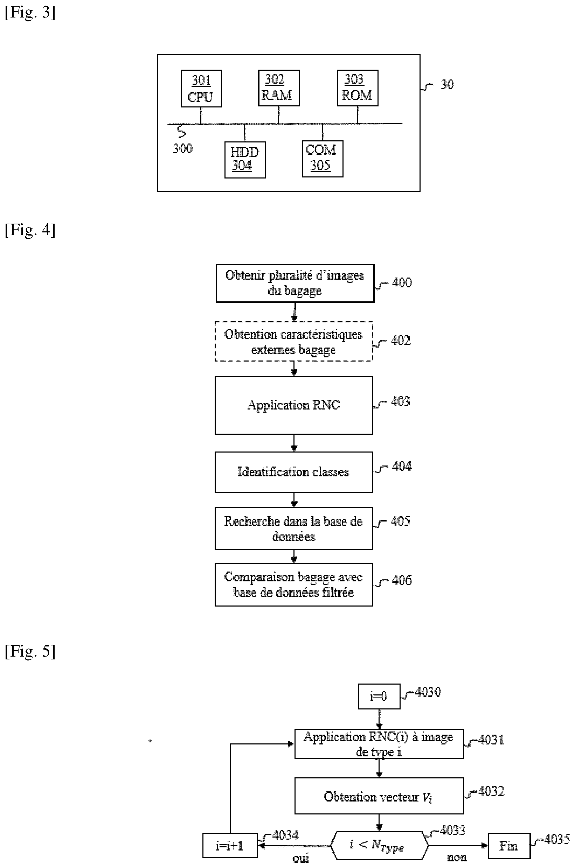

Dans l'exemple de la Fig. 2, le poste d'enregistrement de bagages 20 comprend un système permettant d'acquérir des images d'un bagage comprenant quatre supports de caméras 21A, 21B, 21C et 21D et un module de traitement 30, non représenté dans la Fig. 2 mais détaillé dans la Fig. 3. Les supports de caméras 21A, 21B, 21C et 21D sont des tiges de hauteurs variables. Le support de caméras 21A (respectivement 21B, 21C et 21D) comporte au moins une caméra 22A (respectivement 22B, 22C et 22D), les caméras 21B et 21C n'apparaissant pas dans la Fig. 2. Chaque caméra est focalisée sur une zone où doit se trouver un bagage suite au dépôt dudit bagage sur le poste d'enregistrement 20. Si le bagage n'est pas positionné de manière à être visible au moins en partie par chaque caméra, l'opérateur peut par exemple actionner le tapis roulant du poste d'enregistrement 20 afin de positionner le bagage correctement.

Dès que le bagage est positionné correctement par rapport à chaque caméra, le module de traitement 30 active chaque caméra afin d'acquérir une image du bagage par caméra. Dans l'exemple de la Fig. 2, les caméras 22B et 22D (respectivement 22A et 22C) sont positionnées à une même hauteur, mais ont des points de vue quasiment opposés sur le bagage. Les caméras 22B et 22D d'une part et 22A et 22C d'autre part sont positionnées à des hauteurs différentes. Chaque image acquise représente donc un point de vue différent dudit bagage. On dit alors que les images acquises par les caméras 21A, 21B, 21C et 21D sont de types différents. Le type d'une image d'un bagage dépend donc dans ce cas d'un point de vue sur ledit bagage représenté par ladite image.

Dans un mode de réalisation, chaque caméra fait des acquisitions d'images dans un domaine visible. Une caméra faisant des acquisitions dans le domaine du visible est appelée par la suite *caméra visible.*

Dans un mode de réalisation, chaque caméra fait des acquisitions d'images dans un domaine infrarouge (dites images IR). Une caméra faisant des acquisitions dans un domaine infrarouge est appelée par la suite *caméra IR.* Acquérir des images dans le domaine infrarouge permet de pallier des défauts ou des artefacts d'illumination apparaissant dans le domaine visible tel que des reflets sur ledit bagage.

Dans un mode de réalisation, au moins une caméra est apte à fournir une carte de profondeur telle qu'une caméra INTEL^{®} REALSENSE^{™} DEPTH CAMERA D435 décrite dans le document Product brief INTEL^{®} REALSENSE^{™} DEPTH CAMERA D435 ou une caméra RGBD (Rouge, vert, bleu, profondeur, « Red Green Blue Depth » en terminologie anglo-saxonne). Une caméra apte à fournir une carte de profondeur, appelée *caméra 3D* par la suite, est capable de fournir des informations tridimensionnelles (*i.e.* une image 3D) sur une scène observée par ladite caméra 3D. Une caméra 3D permet notamment de déterminer des dimensions d'un bagage telles que sa longueur, sa largeur et son épaisseur.

Dans un mode de réalisation, les caméras 21A, 21B, 21C et 21D combinent au moins une caméra visible, au moins une caméra IR et au moins une caméra 3D.

Lorsque les caméras 21A, 21B, 21C et 21D comprennent au moins deux caméras fournissant des images de natures différentes (image dans le domaine du visible et image IR, ou image dans le domaine du visible et image de carte de profondeur, ou image de carte de profondeur et image IR, etc.), le type d'une image d'un bagage dépend dans ce cas d'un point de vue sur ledit bagage représenté par ladite image et de la nature de ladite image.

Dans un mode de réalisation, le système permettant d'acquérir des images d'un bagage comprend au moins un support de caméras, chaque support de caméras comprenant au moins une caméra. Ledit système fournit au moins deux images d'un même bagage de types différents. Lorsque le système permettant d'acquérir des images d'un bagage comprend une seule caméra, deux images de types différents sont obtenues par exemple en actionnant le tapis roulant du poste d'enregistrement de bagages 20 par rapport à la caméra de manière à déplacer légèrement le bagage. Le tapis roulant est par exemple actionné par le module de traitement 30.

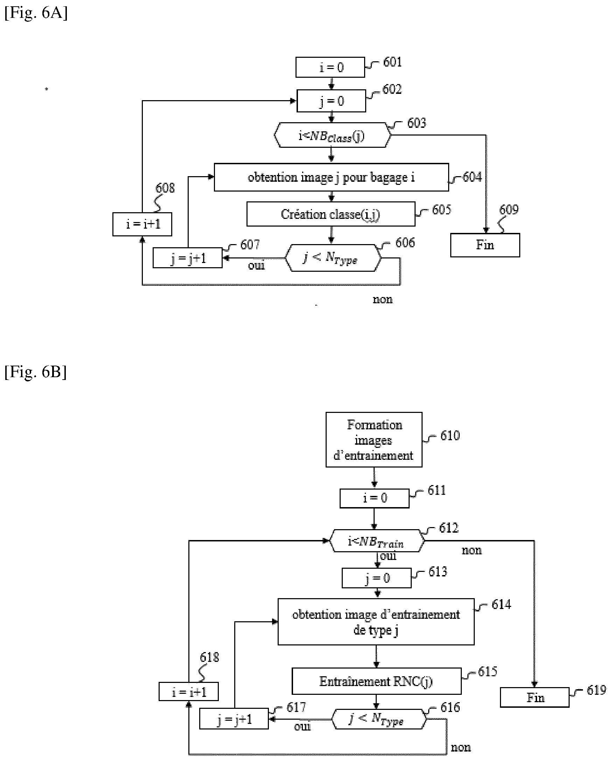

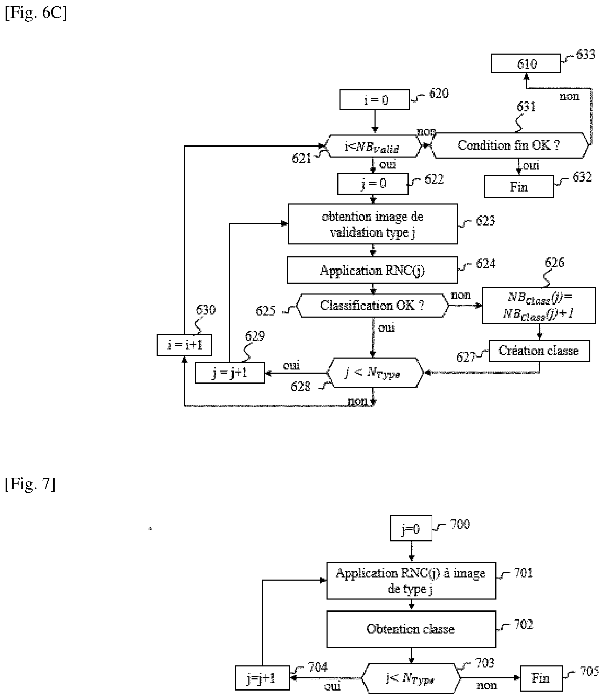

Dans un mode de réalisation, nous supposons que chaque poste d'enregistrement de bagages utilisé par une compagnie aérienne comprend un système permettant d'acquérir des images d'un bagage tel que décrit en relation avec la Fig. 2. Chaque image acquise par l'un de ces systèmes est stockée dans une base de données. Dans cette base de données, chaque image est associée à une information représentative du destinataire du bagage, une information d'horodatage représentant la date d'enregistrement dudit bagage et une information de classification du bagage contenu dans l'image. Dans un mode de réalisation, le module de traitement 30 communique avec un dispositif ayant généré l'étiquette apposée sur le bagage et l'information représentative du destinataire du bagage stockée dans la base de données est représentée par une copie numérique de l'étiquette. Comme nous le décrivons par la suite, le bagage représenté par chaque image de bagage est classé dans une classe de bagages d'un ensemble de classes de bagages. Chaque type d'images est associé à un ensemble de classes de bagages dépendant dudit type. Nous décrivons par la suite en relation avec les Figs. 6A, 6B et 6C comment sont formées les classes de bagages et en relation avec la Fig. 7 comment est classé chaque bagage. Chaque image de bagage (et donc chaque bagage) enregistrée par la compagnie aérienne est donc référencée dans la base de données.

La base de données est par exemple stockée sur un serveur distant d'une compagnie aérienne avec lequel le module de traitement 30 de chaque système permettant d'acquérir des images d'un bagage est connecté par un réseau de communication. Chaque système permettant d'acquérir des images d'un bagage lors de l'enregistrement dudit bagage est appelé par la suite, *système d'enregistrement.*

La **Fig. 3** illustre schématiquement un exemple d'une architecture matérielle du module de traitement 30.

Selon l'exemple d'architecture matérielle représenté à la Fig. 3, le module de traitement 30 comprend alors, reliés par un bus de communication 300 : un processeur ou CPU (« Central Processing Unit » en anglais) 301 ; une mémoire vive RAM (« Random Access Memory » en anglais) 302 ; une mémoire morte ROM (« Read Only Memory » en anglais) 303 ; une unité de stockage telle qu'un disque dur ou un lecteur de support de stockage, tel qu'un lecteur de cartes SD (« Secure Digital » en anglais) 304 ; au moins une interface de communication 305 permettant par exemple au module de traitement 30 de recevoir des images des caméras 21A, 21B, 21C et 21D, de communiquer avec un serveur distant stockant la base de données.

Le processeur 301 est capable d'exécuter des instructions chargées dans la RAM 302 à partir de la ROM 303, d'une mémoire externe (non représentée), d'un support de stockage (tel qu'une carte SD), ou d'un réseau de communication. Lorsque le module de traitement 30 est mis sous tension, le processeur 301 est capable de lire de la RAM 302 des instructions et de les exécuter. Ces instructions forment un programme d'ordinateur causant l'exécution, par le processeur 301, du procédé décrit ci-après en relation avec les Figs. 4.

Le procédé décrit en relation avec la Fig. 4 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gâte Array » en anglais) ou un ASIC (« Application-Specific Integrated Circuit » en anglais).

La **Fig. 4** illustre schématiquement un procédé d'identification d'un destinataire d'un bagage non-identifié.

Le procédé de la Fig. 4 est exécuté lors d'une découverte d'un bagage non identifié (par exemple, sans étiquette) dans un aéroport. Un opérateur fait des acquisitions d'images dudit bagage afin de le comparer avec des bagages de la base de données. Dans un mode de réalisation, l'opérateur utilise pour cela un système permettant d'acquérir des images d'un bagage identique au système décrit en relation avec la Fig. 2. Un système permettant d'acquérir des images d'un bagage non-identifié est appelé par la suite *système de recherche.* Par contre, les conditions d'acquisition des images du bagage non-identifié par le système de recherche (*i.e.* position du bagage dans le système, conditions d'illumination) ne sont pas nécessairement identiques aux conditions d'acquisition des images du même bagage par le système d'enregistrement. Nous verrons par la suite que le procédé d'identification d'un destinataire d'un bagage non-identifié s'appuie sur un réseau de neurones convolutif ce qui permet de ne pas avoir à calibrer les conditions d'acquisition de manière à ce qu'elles soient identiques sur le système d'enregistrement et sur le système de recherche.

Dans une étape 400, le module de traitement 30 du système de recherche obtient une pluralité d'images du bagage non identifié de types différents. Pour ce faire le module de traitement 30 du système de recherche provoque une acquisition d'images du bagage non-identifié. Dans ce mode de réalisation, les systèmes de départ et d'arrivée étant identiques, le module de traitement 30 du système de recherche obtient une image du bagage pour chaque type d'image acquis par le système d'enregistrement. Le système de recherche obtient alors un nombre *N_{Type}* d'images, le nombre *N_{Type}* étant le nombre de type d'images différent que doit considérer le module de traitement 30 du système de recherche.

Dans une étape 403, pour chaque image du bagage non-identifié obtenue, le module de traitement 30 du système de recherche applique à ladite image un réseau de neurones convolutif (RNC) entraîné sur des images de bagages du même type que ladite image afin d'obtenir pour chaque classe d'une pluralité de classes de bagages définies pour le type de ladite image, une probabilité que ledit bagage non-identifié appartienne à ladite classe.

Une application d'un réseau de neurones convolutif comprend en général quatre phases :
- Une phase de convolution ;
- Une phase dite de « mise en commun » ;
- Une phase d'application d'une fonction d'activation ;
- Une phase de combinaison linéaire, dite « fully connected ».

La phase de convolution comprend une convolution ou plusieurs convolutions successives par un noyau de convolution. En sortie de chaque convolution de données d'entrée par le noyau de convolution, on obtient un ensemble de caractéristiques représentatives desdites données d'entrée. Les caractéristiques obtenues ne sont pas prédéfinies mais apprises par le réseau de neurones lors d'une phase d'entraînement. Pendant la phase d'entraînement, le noyau de convolution évolue de manière à « apprendre » à extraire des caractéristiques pertinentes pour un problème donné.

La phase de « mise en commun » (« pooling » en terminologie anglo-saxonne) est une phase intermédiaire entre deux convolutions. Chaque phase de « mise en commun » a pour but de réduire la taille des données qu'elle reçoit en entrée, tout en préservant les caractéristiques importantes de ces données d'entrée. La phase de « mise en commun » permet de réduire le nombre de calculs dans le réseau de neurones convolutif.

La phase d'application d'une fonction d'activation consiste à appliquer une fonction mathématique, dite *fonction d'activation,* aux données obtenues en sortie de chaque convolution. Le terme de *fonction d'activation* vient d'un équivalent biologique *potentiel d'activation,* qui représente un seuil de stimulation qui, une fois atteint, entraîne une réponse d'un neurone.

La phase de combinaison linéaire constitue toujours la dernière phase d'un réseau de neurones, qu'il soit convolutif ou non. Cette phase reçoit un vecteur en entrée, dit *vecteur d'entrée,* et produit un nouveau vecteur en sortie, dit *vecteur de sortie.* Pour cela, elle applique une combinaison linéaire aux composantes du vecteur d'entrée. La phase de combinaison linéaire permet de classifier les données d'entrée du réseau de neurones suivant un nombre de classes prédéfinies *N.* Elle renvoie donc un vecteur de sortie de taille *N.* Chaque composante du vecteur de sortie est associée à une classe et est représentative d'une probabilité pour les données d'entrée du réseau de neurones d'appartenir à ladite classe. Chaque composante du vecteur d'entrée peut contribuer différemment au vecteur de sortie. Pour ce faire, lors de l'application de la combinaison linéaire, un poids différent est appliqué à chaque composante en fonction d'une importance qu'on souhaite donner à la caractéristique que cette composante représente. La combinaison linéaire de la phase de combinaison linéaire est généralement suivie d'une couche de transformation du vecteur de sortie en distribution de probabilité. Le réseau de neurones convolutif apprend les valeurs des poids de la phase de combinaison linéaire de la même manière qu'il apprend à faire évoluer le noyau de convolution. On dit que les poids de la phase de combinaison linéaire et les caractéristiques du noyau de convolution constituent les *paramètres du réseau de neurones convolutif* ou *paramètres du RNC.*

Comme nous le décrivons par la suite, les paramètres de chaque RNC et les classes de bagages sont fournis par le serveur distant de la compagnie aérienne à chaque système d'enregistrement et chaque système de recherche.

La **Fig. 5** détaille l'étape 403.

Le module de traitement 30 utilisé dans les étapes du procédé de la Fig. 5 est celui du système de recherche.

Dans une étape 4030, le module de traitement 30 initialise une variable *i* à zéro. La variable *i* va permettre de parcourir tous les types d'images.

Dans une étape 4031, le module de traitement 30 applique le RNC entraîné sur des images de type d'indice *i* à l'image de type d'indice *i* du bagage non-identifié. On désigne par la suite le RNC entraîné sur des images de type d'indice *i, RNC(i).* Nous décrivons par la suite en relation avec la Fig. 6B comment chaque RNC *RNC(i)* est entraîné. Dans un mode de réalisation, le module de traitement 30 utilise un réseau de neurone convolutif décrit dans le document « ImageNet Classification with Deep Convolutional Neural Networks, A. Krizhevsky, I. Sustkever, G. E. Hinton, Part of: Advances in Neural Information Processing Systems 25 (NIPS 2012) » lorsque le type d'images correspond à des images dans le domaine du visible ou des images IR. Dans un mode de réalisation, le module de traitement 30 utilise un réseau de neurone convolutif décrit dans le document « VoxNet: A 3D Convolutional Neural Network for real-time object recognition, Daniel Maturana ; Sebastian Scherer, 2015 IEEE/RSJ International Conference on Intelligent Robots and Systems (IROS) » lorsque le type d'images correspond à des images 3D.

Dans une étape 4032, en sortie de l'application du *RNC(i)* à l'image de type d'indice *i* du bagage non-identifié, le module de traitement 30 obtient un vecteur *Vᵢ.* Le vecteur *Vᵢ* comprend *j* composantes représentant chacune une probabilité que le bagage non-identifié corresponde à une classe de bagages *classe(i,j)* définie pour le type d'images d'indice *i.* Nous décrivons par la suite un exemple de méthode de définition de classes en relation avec la Fig. 6A.

Dans une étape 4033, le module de traitement 30 compare la variable *i* au nombre de types d'images différents *N_{Type}.* Si *i < N_{Type},* le module de traitement 30 incrémente la variable *i* d'une unité pour passer au type d'images suivant et retourne à l'étape 4031. Sinon, le module de traitement 30 met fin à l'application des RNC lors d'une étape 4035 (*i.e.* met fin à l'exécution de l'étape 403).

De retour à la Fig. 4, lors d'une étape 404, pour chaque image du bagage non-identifié, le module de traitement 30 du système de recherche identifie la classe de bagages de la pluralité de classes de bagages définies pour le type de ladite image ayant la probabilité la plus élevée. Pour ce faire, le module de traitement 30 du système de recherche détermine la composante du vecteur *Vᵢ* correspondant au type de ladite image ayant la probabilité la plus élevée. A l'issue de l'étape 404, le module de traitement 30 du système de recherche obtient pour chaque type d'images, une classe de bagages pour le bagage non-identifié représenté dans ladite image.

Dans une étape 405, le module de traitement 30 applique une procédure de recherche de bagages correspondant à chaque classe identifiée dans la base de données afin d'obtenir au moins un bagage candidat. Les bagages recherchés dans la base de données doivent être associés, pour chaque type d'images, à la même classe de bagages. La probabilité que deux bagages soient associés aux mêmes classes pour chaque type d'images étant faible, le nombre de bagages candidats est faible, mais est au moins égal à l'unité puisque le bagage non-identifié est référencé dans la base de données.

Dans une étape 406, le module de traitement 30 fournit à l'opérateur chaque image stockée dans la base de données correspondant aux bagages associés, pour chaque type d'images, à la même classe de bagages. A partir de ces images, l'opérateur compare le bagage non-identifié avec chaque bagage candidat afin d'identifier le destinataire du bagage non-identifié. L'opérateur peut ensuite réétiqueter le bagage non-identifié avec l'étiquette originale stockée dans la base de données.

Dans un mode de réalisation, le système de recherche est différent du système d'enregistrement. Par exemple, le système de recherche comprend moins de caméras que le système d'enregistrement, ou des caméras positionnées à des endroits différents. Dans un mode de réalisation, le système de recherche est mis en œuvre sur un dispositif nomade, tel qu'un téléphone intelligent (« smartphone » en terminologie anglo-saxonne) ou une tablette, muni d'une caméra. L'opérateur prend alors des images du bagage non-identifié à partir dudit dispositif nomade suivant plusieurs points de vue. Dans ce mode de réalisation, chaque image acquise par le système de recherche est considérée comme appartenant à chaque type d'image associé à la même nature d'image. Par exemple, une image dans le domaine du visible acquise par le système de recherche est considérée comme appartenant à tous les types d'images comportant des images dans le domaine du visible, quel que soit le point de vue sur le bagage représenté par cette image. Il est possible alors d'avoir en entrée de l'étape 403 plusieurs images pour un même type d'images et donc d'obtenir plusieurs vecteurs pour un même type d'images. Dans ce cas, lors de l'étape 404, la classe du bagage identifiée pour ce type d'images est la classe associée à la probabilité la plus élevée dans tous les vecteurs associés à ce type d'images.

Dans un mode de réalisation, le procédé de la Fig. 4 comprend une étape 402, intermédiaire entre l'étape 400 et l'étape 403. Dans ce mode de réalisation, lors de l'enregistrement d'un bagage, le module de traitement 30 du système d'enregistrement stocke dans la base de données des informations externes représentatives du bagage. Les informations externes sont par exemple, un poids du bagage fourni par le tapis roulant du poste d'enregistrement 20, une information représentative de la ou des couleurs du bagage fournie par une caméra dans le domaine du visible, des dimensions du bagage fournies par une caméra 3D. Lors de l'étape 402, le module de traitement 30 du système de recherche obtient au moins une partie de ces informations externes représentatives du bagage et les utilise pour préfiltrer la base de données afin de ne rechercher, dans l'étape 405, que parmi les bagages associés aux mêmes informations externes.

Dans un autre mode de réalisation, il est connu que lorsqu'un destinataire d'un bagage ne récupère pas ledit bagage, il en informe la compagnie aérienne en charge du bagage. Chaque bagage étant associé à une information représentative de son destinataire dans la base de données, dès qu'un bagage est déclaré perdu par son destinataire, la compagnie aérienne retrouve le bagage dans la base de données et modifie les informations relatives audit bagage dans la base de données afin d'y ajouter une information indiquant que le bagage a été perdu. Ainsi, dans ce mode de réalisation, qui peut être combiné au mode de réalisation précédent, lors de l'étape 405, le module de traitement 30 du système de recherche ne recherche que parmi les bagages déclarés perdus dans la base de données.

Dans un autre mode de réalisation qui peut être combiné aux deux modes de réalisation précédents, le module de traitement 30 du système de recherche utilise les informations d'horodatage associées à chaque bagage référencé dans la base de données pour filtrer la base de données. Ainsi, en considérant qu'un bagage non-identifié est découvert en général dans une période de durée *D* suivant son enregistrement, le module de traitement 30 du système de recherche recherche, lors de l'étape 405, uniquement parmi les bagages enregistrés dans la base de données pendant une période *D* précédant la découverte du bagage non-identifié.

La **Fig. 6A** illustre schématiquement un exemple de procédé de création de classes.

Un réseau de neurones classe des données d'entrée selon des classes et fournie en sortie, pour chaque classe, une probabilité que les données d'entrée correspondent à ladite classe. Le procédé de la Fig. 6A permet de définir des classes automatiquement.

Le procédé de la Fig. 6A est exécuté par un module de traitement du serveur distant. Dans un mode de réalisation, le module de traitement du serveur distant est identique au module de traitement 30.

Au lancement du serveur distant et de chaque système d'enregistrement, aucun bagage n'est référencé dans la base de données. Aucune classe n'a encore été créée. La base de données est enrichie et les classes sont créées au fur et à mesure des enregistrements de bagages sur des postes d'enregistrement de bagages comprenant un système d'enregistrement. Lors de l'exécution du procédé de la Fig. 6A, chaque système d'enregistrement faisant une acquisition d'images lors d'un enregistrement de bagages, transmet ces images au module de traitement du serveur distant. Dans un mode de réalisation, pendant l'exécution du procédé de la Fig. 6A, aucun système d'enregistrement n'essaye de classer un bagage. Les systèmes de départ se contentent juste d'acquérir des images de bagages.

Dans une étape 601, le module de traitement du serveur distant initialise une variable *i* à zéro. La variable *i* permet de comptabiliser le nombre de classes créées.

Dans une étape 602, le module de traitement du serveur distant initialise une variable *j* à zéro. La variable *j* permet de parcourir les types d'images.

Dans une étape 603, le module de traitement du serveur distant compare la variable *i* à un nombre de classes *NB_{Class}(j)* pour le type d'image *j.* A cette étape, le nombre de classes *NB_{Class}(j)* est prédéfini. Par exemple, *NB_{Class}(j) =* 1000. Si la variable *i* a atteint le nombre de classes *NB_{Class}(j),* le procédé de la Fig. 6A prend fin lors d'une étape 609. Un nombre de classes *NB_{Class}(j)* a alors été défini pour chaque type d'image *j*.

Sinon, lors d'une étape 604, le module de traitement du serveur distant se met en attente d'une réception d'une image pour le type d'images d'indice *j* de la part d'un module de traitement 30 d'un système d'enregistrement.

Lorsque le module de traitement du serveur distant reçoit une image, dite image courante, il crée une nouvelle classe de bagages similaires ou identiques au bagage représenté par l'image courante pour le type d'images d'indice *j* lors d'une étape 605. En d'autres termes, le module de traitement du serveur ajoute une nouvelle classe à une liste de classes éventuellement existantes pour le type d'images d'indice *j.*

Dans une étape 606, le module de traitement du serveur distant compare la variable *j* au nombre de types différents *N_{Type}.* Si *j < N_{Type},* le module de traitement du serveur distant incrémente une variable *j* d'une unité et retourne à l'étape 604.

Sinon, le module de traitement du serveur distant passe à une étape 608 au cours de laquelle il incrémente une variable *i* d'une unité et retourne à l'étape 602.

On note que le procédé de la Fig. 6A permet de créer *NB_{Class}(j)* classes de bagages pour chacun des *N_{Type}* types d'images différents à partir des *NB_{Class}(j)* premiers bagages enregistrés par des postes d'enregistrement de bagages comprenant un système d'enregistrement. On estime ici qu'un nombre *NB_{Class}(j)* permet d'obtenir une diversité de classes de bagages suffisantes représentatives de l'ensemble des bagages qu'aurait à enregistrer la compagnie aérienne.

La **Fig. 6B** illustre schématiquement un exemple de procédé d'entraînement de réseaux de neurones convolutifs.

Comme tous RNC, chaque RNC utilisé dans l'étape 403 doit être entraîné. Le procédé de la Fig. 6B est exécuté par le module de traitement du serveur distant à la suite du procédé de la Fig. 6A. Pour effectuer son entraînement, chaque RNC doit utiliser des images, dites *images d'entraînement,* pour lesquels le classement selon les classes définies par le procédé de la Fig. 6A est connu.

Dans une étape 610, pour chaque type d'images, le module de traitement du serveur distant, génère des images d'entraînement à partir des images ayant servi à définir les classes de bagages, appelées par la suite *images de base.* Pour ce faire, pour chaque image de base, le module de traitement crée un nombre prédéfini *nₜᵣₐᵢₙ* d'images d'entraînement. On obtient alors un nombre d'images d'entraînement *NB_{Train}* = *nₜᵣₐᵢₙ* × *NB_{Class}(j)* pour chaque type d'images. Dans un mode de réalisation *nₜᵣₐᵢₙ=5.* Pour chaque image de base dans le domaine du visible ou chaque image infrarouge, chaque image d'entraînement est par exemple obtenue de la manière suivante :
- Première image d'entraînement : filtrage passe-bas des valeurs de pixels de l'image de base ;
- Deuxième image d'entraînement : ajout d'un bruit gaussien aux valeurs de pixels de l'image de base ;
- Troisième image d'entraînement : diminution de la résolution de l'image de base par exemple par sous-échantillonnage ;
- Quatrième image d'entraînement : augmentation de la résolution de l'image de base par interpolation linéaire des valeurs de pixels ;
- Cinquième image d'entraînement : suppression d'une bande de largeur prédéfinie à gauche et à droite de l'image de base.

Pour chaque image de base représentant une image 3D, chaque image d'entraînement est par exemple obtenue de la manière suivante :
- Première image d'entraînement : filtrage passe-bas des valeurs de profondeur de l'image de base ;
- Deuxième image d'entraînement : ajout d'un bruit gaussien aux valeurs de profondeur de l'image de base ;
- Troisième image d'entraînement : diminution de la résolution de l'image de base par exemple par sous-échantillonnage ;
- Quatrième image d'entraînement : augmentation de la résolution de l'image de base par interpolation linéaire des valeurs de profondeur ;
- Cinquième image d'entraînement : suppression d'une bande de largeur prédéfinie à gauche et à droite de l'image de base.

Dans un mode de réalisation, le nombre prédéfini d'images d'entraînement *nₜᵣₐᵢₙ* pourrait être différent de « 5 ». Par ailleurs, d'autres méthodes d'obtention des images d'entraînement pourraient être envisagées. Dans une étape 611, le module de traitement du serveur distant initialise une variable *i* à zéro. La variable *i* est utilisée pour comptabiliser un nombre d'images d'entraînements utilisées.

Dans une étape 612, le module de traitement du serveur distant compare la variable *i* avec le nombre d'images d'entraînements *NB_{Train}.* Si *i=NB_{Train},* l'entraînement des réseaux de neurones prend fin lors d'une étape 619. Sinon, le module de traitement du serveur distant initialise une variable *j* à zéro lors d'une étape 613. La variable *j* est utilisée pour parcourir chaque type d'images.

Dans une étape 614, le module de traitement du serveur distant obtient une image d'entraînement de type d'indice *j.*

Dans une étape 615, le module de traitement du serveur distant entraîne un réseau de neurone *RNC(j)* dédié aux images de type d'indice *j* en utilisant l'image d'entraînement. Au cours de cette étape, le module de traitement du serveur distant détermine (apprend) les paramètres du réseau de neurones. Pour ce faire, il utilise une méthode d'entraînement décrite dans le document « ImageNet Classification with Deep Convolutional Neural Networks, A. Krizhevsky, I. Sustkever, G. E. Hinton, Part of: Advances in Neural Information Processing Systems 25 (NIPS 2012) » lorsque le type d'images correspond à des images dans le domaine du visible ou des images IR ou dans le document « VoxNet: A 3D Convolutional Neural Network for real-time object recognition, Daniel Maturana ; Sebastian Scherer, 2015 IEEE/RSJ International Conférence on Intelligent Robots and Systems (IROS) » lorsque le type d'images correspond à des images 3D. Chaque image d'entraînement étant issue d'une image de base, le classement d'une image d'entraînement est dérivé de la classe issue de l'image de base d'origine. On note que lors de la première exécution de l'étape 615, le paramètres du réseau de neurones sont initialisés aléatoirement.

Dans une étape 616, le module de traitement du serveur distant compare la variable *j* au nombre de types d'images différentes *N_{Type}.* Si *j < N_{Type},* le module de traitement du serveur distant incrémente la variable *j* d'une unité lors d'une étape 617 et retourne à l'étape 614 pour passer à l'entraînement d'un autre réseau de neurones. Sinon, le module de traitement du serveur distant incrémente la variable *i* d'une unité lors d'une étape 618. Lors de l'étape 619, on obtient donc pour chaque type d'images d'indice *j* parmi les *N_{Type}* types d'images différents, un réseau de neurone entraîné *RNC(j).*

La **Fig. 6C** illustre schématiquement un exemple de procédé de validation de réseaux de neurones convolutifs.

Il est classique de vérifier qu'un réseau de neurones a été correctement entraîné. Pour ce faire, quand un réseau de neurones est utilisé pour faire de la classification d'images, on utilise des images, dites images de validation, n'ayant pas servi à l'entraînement du réseau de neurones pour vérifier que le réseau de neurone classe correctement ces images de validation. En général, si un taux d'erreur de classification est trop élevé, on entraîne de nouveau le réseau de neurones. Dans le cadre de l'invention, les erreurs peuvent aussi être dues à une mauvaise définition des classes par le procédé de la Fig. 6A. En effet, il est possible que les *NB_{Class}(j)* définies dans le procédé de la Fig. 6A ne soient pas représentatives de tous les bagages possibles que pourrait recevoir une compagnie aérienne. Dans un mode de réalisation, le procédé de la Fig. 6C est exécuté optionnellement par le module de traitement du serveur distant à la suite du procédé de la Fig. 6B. Pour exécuter ce procédé, le module de traitement du serveur distant utilise des images fournies par des systèmes de départ. Dans un mode de réalisation, pendant l'exécution du procédé de la Fig. 6C, aucun système d'enregistrement ne cherche à classifier des bagages.

Dans une étape 620, le module de traitement du serveur distant initialise une variable *i* à zéro. La variable *i* est utilisée pour comptabiliser les images de validation.

Dans une étape 621, le module de traitement du serveur distant compare la variable *i* à un nombre d'images de validation prédéterminé *NB_{Valid}.* Dans un mode de réalisation, *NB_{Valid}=500.* Si *i* <*NB_{Valid},* le module de traitement du serveur distant initialise une variable *j* à zéro. La variable *j* sert à parcourir les types d'images.

Dans une étape 623, le module de traitement du serveur distant obtient une image de validation de type d'indice *j* transmise par un système d'enregistrement lors d'un enregistrement d'un bagage.

Dans une étape 624, le module de traitement du serveur distant applique le RNC *RNC(j)* à l'image de validation reçue à l'étape 624. A la suite de cette étape, le module de traitement du serveur distant obtient un vecteur *Vᵢ* de taille *NB_{Class}(j)* dans lequel chaque composante représente une probabilité que le bagage représenté par l'image de validation corresponde à la classe de bagages correspondant à ladite composante.

Dans une étape 625, le module de traitement du serveur distant détermine si la classification du bagage représentée par l'image de validation est acceptable. Pour ce faire, par exemple, le module de traitement du serveur distant compare chaque composante du vecteur *Vᵢ* à un seuil de probabilité prédéfini *P_{TH}.* Si au moins une des composantes est supérieure au seuil de probabilité prédéfini *P_{TH},* le module de traitement du serveur distant considère que la classification est acceptable. Dans ce cas le module de traitement du serveur distant exécute une étape 628 au cours de laquelle il compare la variable *j* au nombre de types d'images différentes *N_{Type}.* Sinon, le module de traitement du serveur distant incrémente d'une unité le nombre de classes *NB_{Class}(j)* pour le type d'images d'indice *j* lors d'une étape 626. Dans une étape 627, le module de traitement du serveur distant crée une nouvelle classe à partir de l'image de validation. L'étape 627 est suivie de l'étape 628. La probabilité prédéfinie *P_{TH}* est par exemple égale à « 0.5 ». Ainsi si le vecteur *Vᵢ* ne comprend aucune composante représentant une probabilité d'appartenir à une classe supérieure à « 0.5 », le module de traitement du serveur distant considère qu'il y a une incertitude sur la classification et qu'une nouvelle classe doit être créée.

Si lors de l'étape 628, *j < N_{Type},* le module de traitement du serveur distant incrémente la variable *j* d'une unité lors d'une étape 629 et retourne à l'étape 623 pour passer à un autre type d'images. Sinon, le module de traitement du serveur distant incrémente la variable *i* d'une unité lors d'une étape 630 et retourne à l'étape 621.

Si lors de l'étape 621, *i* a atteint *NB_{Valid},* le module de traitement du serveur distant vérifie si une condition de fin d'exécution des procédés des Figs. 6B et 6C est remplie. Une condition de fin d'exécution est par exemple que le module de traitement a exécuté les procédés des Figs. 6B et 6C un nombre de fois égal à un nombre prédéfini NMAX ou qu'un temps cumulé d'exécution des procédés des Figs. 6B et 6C a dépassé une durée prédéfinie DMAX ou qu'un nombre de classes créées entre l'étape 620 et l'étape 631 est inférieur à un nombre NMIN. Par exemple NMAX=10, DMAX=24 heures et NMIN=50.

Si la condition de fin d'exécution est remplie, le module de traitement du serveur distant met fin au procédé de la Fig. 6C lors d'une étape 631. Sinon, le module de traitement du serveur distant retourne à l'étape 610 et exécute à nouveau le procédé de la Fig. 6B. On note que lors de chaque exécution du procédé de la Fig. 6B suivant l'étape 631, la détermination des paramètres des réseaux de neurones *RNC(j)* repart des derniers paramètres déterminés. Le procédé de la Fig. 6B est de nouveau suivi du procédé de la Fig. 6C.

Les paramètres des *N_{Type}* réseaux de neurones *RNC(j),* une fois déterminés par le procédé de la Fig. 6B ou par la combinaison des procédés des Figs. 6B et 6C sont transmis au module de traitement 30 de chaque système de recherche et chaque système d'enregistrement. De même, une fois définies par le procédé de la Fig. 6A ou par la combinaison des procédés des Figs. 6A, 6B et 6C, des informations représentatives de chaque classe sont transmises au module de traitement 30 de chaque système de recherche et chaque système d'enregistrement. Ainsi, un module de traitement 30 obtenant une image d'un bagage, classifie le bagage de la même manière (*i.e.* le vecteur obtenu en sortie du réseau de neurones convolutif correspondant au type de ladite image est identique) quel que soit le système d'enregistrement ou le système de recherche comprenant ledit module de traitement 30. La **Fig. 7** illustre schématiquement un exemple de procédé de classement de bagages basé sur des réseaux de neurones convolutifs.

Comme nous l'avons vu plus haut, chaque bagage enregistré par la compagnie aérienne est référencé dans la base de données de ladite compagnie. Dans cette base de données, chaque image d'un bagage acquise par un système d'enregistrement est stockée dans une base de données. Dans cette base de données chaque image de bagage est associée, entre autres, à une information de classification du bagage contenu dans ladite image. Le procédé de la figure 7 permet d'obtenir ces informations de classification. Ce procédé est exécuté par un module de traitement 30 d'un système d'enregistrement lors de chaque enregistrement d'un bagage par la compagnie aérienne. Dans un mode de réalisation, ce procédé est exécuté par un système d'enregistrement une fois que ce système a reçu les paramètres des *N_{Type}* réseaux de neurones *RNC(j)* et les informations représentatives de chaque classe.

Dans une étape 700, le module de traitement 30 a obtenu *N_{Type}* images d'un même bagage. Lors de l'étape 700, le module de traitement 30 initialise une variable *j* à zéro.

Dans une étape 701, le module de traitement 30 applique le RNC *RNC(j)* à l'image de type d'indice *j.* En sortie de l'application du RNC *RNC(j),* le module de traitement 30 obtient un vecteur *Vᵢ* dans lequel chaque composante représente une probabilité que le bagage représenté dans l'image de type d'indice *j* appartienne à une classe de bagages correspondant à ladite composante.

Dans une étape 702, le module de traitement 30 détermine la composante correspondant à la probabilité la plus élevée. De cette manière, le module de traitement 30 détermine à quelle classe appartient le bagage représenté dans ladite image de type d'indice *j.* Une information de classification du bagage est alors stockée pour le type d'indice *j.*

Dans une étape 703, le module de traitement 30 compare la variable *j* au nombre de type d'images *N_{Type}.* Si *j* < *N_{Type},* le module de traitement 30 incrémente la variable *j* d'une unité pour passer à un nouveau type. Sinon, le module de traitement 30 met fin à la classification du bagage lors d'une étape 705.

## Revendications

1. Procédé d'identification d'un bagage dénué d'identifiant représentatif d'un destinataire dudit bagage, dit bagage non-identifié, comprenant :
- obtenir (400) au moins deux images du bagage non-identifié de types différents, le type d'une image d'un bagage dépendant d'un point de vue sur ledit bagage représenté par ladite image et/ou d'une nature des données représentatives dudit bagage dans ladite image prise parmi une pluralité de natures de données différentes comprenant des données représentatives du domaine du visible et/ou des données représentatives du domaine infra-rouge et/ou des données représentatives d'informations tridimensionnelles ;
pour chaque image du bagage non identifié obtenue :
- appliquer à ladite image un réseau de neurones convolutif entraîné sur des images de bagages du même type que ladite image afin d'obtenir pour chaque classe d'une pluralité de classes de bagages définies pour le type de l'image une probabilité que ledit bagage non-identifié appartienne à ladite classe ; et,
- identifier la classe de bagages ayant la probabilité la plus élevée ;
- appliquer une procédure de recherche de bagages comprenant : rechercher des bagages correspondant à chaque classe identifiée dans une base de données de bagages afin d'obtenir au moins un bagage candidat, chaque bagage de ladite base de données étant associé à un identifiant représentatif d'un destinataire du bagage ;
- comparer le bagage non-identifié avec chaque bagage candidat afin d'identifier le destinataire du bagage non-identifié.

2. Procédé selon la revendication 1, comprenant obtenir au moins
une information représentative du bagage non-identifié parmi un poids, une couleur, au moins une dimension, la procédure de recherche de bagages comprenant en outre, rechercher dans la base de données des bagages correspondant à chaque information représentative dudit bagage non-identifié.

3. Procédé selon la revendication 1 ou 2, dans lequel chaque bagage référencé
dans la base de données est associé à une information d'horodatage représentant une date d'enregistrement dudit bagage, la procédure de recherche de bagages comprenant en outre, rechercher dans la base de données des bagages associés à une information d'horodatage correspondant à une période déterminée à partir d'une date de découverte du bagage non-identifié.

4. Procédé selon la revendication 1, 2 ou 3, dans lequel chaque bagage
référencé dans la base de données est associé à un nombre d'informations de classification égal à un nombre de types d'images considérés lors de chaque classification d'un bagage dans la base de données, chaque type d'images utilisé pour le bagage non-identifié correspondant à au moins un type d'images considéré lors de chaque classification d'un bagage dans la base de données, chaque information de classification correspondant à un type d'images et étant représentative d'une classe d'une pluralité de classes associée audit type dans laquelle le bagage a été classifié.

5. Dispositif d'identification d'un bagage dénué d'identifiant représentatif d'un
destinataire dudit bagage, dit bagage non-identifié, comprenant :
- des moyens d'obtention pour obtenir (400) au moins deux images du bagage non-identifié, de types différents, le type d'une image d'un bagage dépendant d'un point de vue sur ledit bagage représenté par ladite image et/ou d'une nature des données représentatives dudit bagage dans ladite image prise parmi une pluralité de natures de données différentes comprenant des données représentatives du domaine du visible et/ou des données représentatives du domaine infra-rouge et/ou des données représentatives d'informations tridimensionnelles ;
- des moyens de classification appliqués à chaque image du bagage non identifié obtenue comprenant : des moyens de traitement pour appliquer à ladite image un réseau de neurones convolutif entraîné sur des images de bagages du même type que ladite image afin d'obtenir pour chaque classe d'une pluralité de classes de bagages définies pour le type de l'image une probabilité que ledit bagage non-identifié appartienne à ladite classe ; et, des moyens d'identification pour identifier la classes de bagages ayant la probabilité la plus élevée ;
- des moyens de traitement pour appliquer une procédure de recherche de bagages comprenant : des moyens de recherche pour rechercher des bagages correspondant à chaque classe identifiée dans une base de données de bagages afin d'obtenir au moins un bagage candidat, chaque bagage de ladite base de données étant associé à un identifiant représentatif d'un destinataire du bagage ; et,
- des moyens de comparaison pour comparer le bagage non-identifié avec chaque bagage candidat afin d'identifier le destinataire du bagage non-identifié.

6. Programme d'ordinateur, comprenant des instructions pour
mettre en œuvre, par un dispositif, le procédé selon l'une quelconque des revendications 1 à 4, lorsque ledit programme est exécuté par un processeur dudit dispositif.

7. Moyens de stockage, stockant un programme d'ordinateur
comprenant des instructions pour mettre en œuvre, par un dispositif, le procédé selon l'une quelconque des revendications 1 à 4, lorsque ledit programme est exécuté par un processeur dudit dispositif.

## Patentansprüche

1. Verfahren zur Identifizierung eines Gepäckstücks ohne Kennung, die für einen Empfänger des Gepäckstücks repräsentativ ist, nichtidentifiziertes Gepäckstück genannt, umfassend:
- Erhalten (400) mindestens zweier Bilder verschiedenen Typs des nicht-identifizierten Gepäckstücks, wobei der Typ eines Bilds eines Gepäckstücks von einer Perspektive auf das Gepäckstück, das von dem Bild dargestellt ist, und/oder einer Art der Daten, die für das Gepäckstück im aufgenommenen Bild repräsentativ sind, aus einer Mehrzahl verschiedener Arten von Daten, die Daten, die für den sichtbaren Bereich repräsentativ sind, und/oder Daten, die für den Infrarotbereich repräsentativ sind, und/oder Daten, die für dreidimensionale Informationen repräsentativ sind, umfassen, abhängig ist;
für jedes erhaltene Bild des nicht-identifizierten Gepäckstücks:
- Anwenden eines faltenden neuronalen Netzes, das an Bildern von Gepäckstücken desselben Typs wie das Bild trainiert wurde, auf das Bild, um für jede Klasse einer Mehrzahl von Klassen von Gepäckstücken, die für den Typ des Bilds festgelegt sind, eine Wahrscheinlichkeit zu erhalten, dass das nicht-identifizierte Gepäckstück zu der Klasse gehört; und,
- Identifizieren der Klasse von Gepäckstücken, die die höchste Wahrscheinlichkeit aufweist;
- Anwenden eines Gepäcksuchverfahrens umfassend: Suchen nach Gepäckstücken, die jeder identifizierten Klasse entsprechen, in einer Gepäckdatenbank, um mindestens ein Kandidaten-Gepäckstück zu erhalten, wobei jedes Gepäckstück der Datenbank einer Kennung zugeordnet ist, die für einen Empfänger des Gepäckstücks repräsentativ ist;
- Vergleichen des nicht-identifizierten Gepäckstücks mit jedem Kandidaten-Gepäckstück, um den Empfänger des nicht-identifizierten Gepäckstücks zu identifizieren.

2. Verfahren nach Anspruch 1, umfassend Erhalten mindestens einer Information, die für das nicht-identifizierte Gepäckstück repräsentativ ist, von einem Gewicht, einer Farbe, mindestens einer Abmessung, wobei das Gepäcksuchverfahren ferner Suchen nach Gepäckstücken in der Datenbank umfasst, die jeder Information entsprechen, die für das nicht-identifizierte Gepäckstück repräsentativ ist.

3. Verfahren nach Anspruch 1 oder 2, wobei jedes Gepäckstück, das in der Datenbank aufgeführt ist, einer Zeitstempelinformation zugeordnet ist, die ein Registrierungsdatum des Gepäckstücks darstellt, wobei das Gepäcksuchverfahren ferner Suchen nach Gepäckstücken in der Datenbank umfasst, die einer Zeitstempelinformation zugeordnet sind, die einem bestimmten Zeitraum ab einem Entdeckungsdatum des nicht-identifizierten Gepäckstücks entspricht.

4. Verfahren nach Anspruch 1, 2 oder 3, wobei jedes Gepäckstück, das in der Datenbank aufgeführt ist, einer Anzahl von Einordnungsinformationen gleich einer Anzahl von Bildertypen zugeordnet wird, die bei jeder Einordnung eines Gepäckstücks in der Datenbank berücksichtigt werden, wobei jeder Bildertyp, der für das nicht-identifizierte Gepäckstück genutzt wird, mindestens einem Bildertyp entspricht, der bei jeder Einordnung eines Gepäckstücks in der Datenbank berücksichtigt wird, wobei jede Einordnungsinformation einem Bildertyp entspricht und für eine Klasse einer Mehrzahl von Klassen, die dem Typen zugeordnet ist, in welche das Gepäckstück eingeordnet wurde, repräsentativ ist.

5. Vorrichtung zur Identifizierung eines Gepäckstücks ohne Kennung, die für einen Empfänger des Gepäckstücks repräsentativ ist, nichtidentifiziertes Gepäckstück genannt, umfassend:
- Mittel zum Erhalten, zum Erhalten (400) mindestens zweier Bilder verschiedenen Typs des nicht-identifizierten Gepäckstücks, wobei der Typ eines Bilds eines Gepäckstücks von einer Perspektive auf das Gepäckstück, das von dem Bild dargestellt ist, und/oder einer Art der Daten, die für das Gepäckstück im aufgenommenen Bild repräsentativ sind, aus einer Mehrzahl verschiedener Arten von Daten, die Daten, die für den sichtbaren Bereich repräsentativ sind, und/oder Daten, die für den Infrarotbereich repräsentativ sind, und/oder Daten, die für dreidimensionale Informationen repräsentativ sind, umfassen, abhängig ist;
- Einordnungsmittel, die auf jedes erhaltene Bild des nicht-identifizierten Gepäckstücks angewandt werden, umfassend: Verarbeitungsmittel zur Anwendung eines faltenden neuronalen Netzes, das an Bildern von Gepäckstücken desselben Typs wie das Bild trainiert wurde, auf das Bild, um für jede Klasse einer Mehrzahl von Klassen von Gepäckstücken, die für den Typ des Bilds festgelegt sind, eine Wahrscheinlichkeit zu erhalten, dass das nicht-identifizierte Gepäckstück zu der Klasse gehört; und Mittel zur Identifizierung der Klasse von Gepäckstücken, die die höchste Wahrscheinlichkeit aufweist;
- Verarbeitungsmittel zur Anwendung eines Gepäcksuchverfahrens, umfassend: Suchmittel zum Suchen nach Gepäckstücken, die jeder identifizierten Klasse entsprechen, in einer Gepäckdatenbank, um mindestens ein Kandidaten-Gepäckstück zu erhalten, wobei jedes Gepäckstück der Datenbank einer Kennung zugeordnet ist, die für einen Empfänger des Gepäckstücks repräsentativ ist; und,
- Vergleichsmittel zum Vergleichen des nicht-identifizierten Gepäckstücks mit jedem Kandidaten-Gepäckstück, um den Empfänger des nicht-identifizierten Gepäckstücks zu identifizieren.

6. Computerprogramm umfassend Anweisungen zur Durchführung des Verfahrens nach einem der Ansprüche 1 bis 4, durch eine Vorrichtung, wenn das Programm von einem Prozessor der Vorrichtung ausgeführt wird.

7. Speichermittel, die ein Computerprogramm speichern, das Anweisungen zur Durchführung des Verfahrens nach einem der Ansprüche 1 bis 4 durch eine Vorrichtung, wenn das Programm von einem Prozessor der Vorrichtung ausgeführt wird, umfasst.

## Claims

1. Method for identifying an item of luggage that is devoid of an identifier that is representative of a recipient of said item of luggage, referred to as an unidentified item of luggage, comprising:
- obtaining (400) at least two images of the unidentified item of luggage of different types, the type of an image of an item of luggage depending on a view point on said item of luggage that is represented by said image and/or on a kind of the data that are representative of said item of luggage in said image which is selected from among a plurality of different kinds of data comprising data that are representative of the visible range and/or data that are representative of the infrared range and/or data that are representative of pieces of three-dimensional information;
for each obtained image of the unidentified item of luggage:
- applying to said image a convolutional neural network that is trained on images of items of luggage of the same type as said image in order to obtain, for each class of a plurality of luggage classes that are defined for the type of the image, a probability that said unidentified item of luggage belongs to said class; and
- identifying the luggage class having the highest probability;
- applying a luggage search procedure comprising: searching for items of luggage corresponding to each class that is identified in a luggage database in order to obtain at least one candidate item of luggage, each item of luggage from said database being associated with an identifier that is representative of a recipient of the item of luggage;
- comparing the unidentified item of luggage with each candidate item of luggage in order to identify the recipient of the unidentified item of luggage.

2. Method according to Claim 1, comprising obtaining at least one piece of information that is representative of the unidentified item of luggage from among a weight, a colour and at least one dimension, the luggage search procedure further comprising searching in the database for items of luggage corresponding to each piece of information that is representative of said unidentified item of luggage.

3. Method according to Claim 1 or 2, wherein each item of luggage that is referenced in the database is associated with a piece of timestamping information representing a date of registration of said item of luggage, the luggage search procedure further comprising searching in the database for items of luggage that are associated with a piece of timestamping information corresponding to a period that is determined on the basis of a date of discovery of the unidentified item of luggage.

4. Method according to Claim 1, 2 or 3, wherein each item of luggage that is referenced in the database is associated with a number of pieces of classification information that is equal to a number of types of images that are considered each time an item of luggage is classified in the database, each type of image that is used for the unidentified item of luggage corresponding to at least one type of image that is considered each time an item of luggage is classified in the database, each piece of classification information corresponding to a type of image and being representative of one class of a plurality of classes that is associated with said type in which the item of luggage has been classified.

5. Device for identifying an item of luggage that is devoid of an identifier that is representative of a recipient of said item of luggage, referred to as an unidentified item of luggage, comprising:
- obtainment means for obtaining (400) at least two images of the unidentified item of luggage, of different types, the type of an image of an item of luggage depending on a view point on said item of luggage that is represented by said image and/or on a kind of the data that are representative of said item of luggage in said image which is selected from among a plurality of different kinds of data comprising data that are representative of the visible range and/or data that are representative of the infrared range and/or data that are representative of pieces of three-dimensional information;
- classification means that are applied to each obtained image of the unidentified item of luggage comprising: processing means for applying to said image a convolutional neural network that is trained on images of items of luggage of the same type as said image in order to obtain, for each class of a plurality of luggage classes that are defined for the type of the image, a probability that said unidentified item of luggage belongs to said class; and identification means for identifying the luggage class having the highest probability;
- processing means for applying a luggage search procedure comprising: search means for searching for items of luggage corresponding to each class that is identified in a luggage database in order to obtain at least one candidate item of luggage, each item of luggage from said database being associated with an identifier that is representative of a recipient of the item of luggage; and
- comparison means for comparing the unidentified item of luggage with each candidate item of luggage in order to identify the recipient of the unidentified item of luggage.

6. Computer program, comprising instructions for implementing, by means of a device, the method according to any one of Claims 1 to 4 when said program is executed by a processor of said device.

7. Storage means, storing a computer program comprising instructions for implementing, by means of a device, the method according to any one of Claims 1 to 4 when said program is executed by a processor of said device.
